# EUROPÄISCHE PATENTSCHRIFT

(11) **EP 0 462 484 B1**
(45) Veröffentlichungstag und Bekanntmachung des Hinweises auf die Patenterteilung: **03.01.1996**
(21) Anmeldenummer: 91109459.7
(22) Anmeldetag: 10.06.1991
(51) Int. Cl.: A01F 15/18, A01F 15/07

(54) **Ballenpresse zum Bilden zylindrischer Ballen aus einem Erntegut**
Balling press to form cylindrical balls of crop
Presse à balles pour former des balles cylindriques de fourrage

(30) Priorität: 18.06.1990 DE 4019335
(43) Veröffentlichungstag der Anmeldung: 27.12.1991
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 309 936
- DE-A- 2 023 274
- US-A- 4 172 354
- US-A- 4 428 282

## Beschreibung

Die Erfindung betrifft eine Ballenpresse zum Bilden zylindrischer Ballen aus einem Erntegut mit einer Ballenbildungskammer, einem dieser vorgeschalteten Einlaßspalt und einer in dem Einlaßspalt angeordneten drehbaren, das Erntegut fördernden oder umlenkenden Walze, auf deren Umfang wenigstens bereichsweise Material erhöhter Griffigkeit vorgesehen ist.

Ballenpressen zum Bilden von sogenannten Rundballen werden zum Fressen von Erntegütern unterschiedlichster Art und bei unterschiedlichsten Erntebedingungen eingesetzt. Abhängig von der Festigkeit, der Feuchtigkeit und der Größe der jeweiligen Halme des betreffenden Ernteguts gestaltet sich auch dessen Verhalten während des Zuführ- und Preßvorgangs. Jedoch soll es mit einer einzigen Ballenpresse möglich sein, alle Erntegüter auch bei verschiedensten Bedingungen zu pressen.

So ist es aus der US-PS-4,428,282 bekannt, am Einlaßspalt zu einer Ballenbildungskammer eine als sogenannte Starterrolle ausgebildete Walze vorzusehen, die mit einer scheinbar glatten metallischen Oberfläche das zugeführte Erntegut in Drehung versetzt, was bei einer Vielzahl von Erntegütern zufriedenstellend funktioniert.

Für die Anwendung in anderen Erntebedingungen, insbesondere beim Pressen von Silagefutter, ist es bekannt, sh. "ROUND BALERS, Vermeer 503 I bis 605 J", die betreffende Walze auf ihrer Mantelfläche mit spiralförmigen Mitnehmern zu versehen.

Darüber hinaus ist es bekannt, die Walze mit parallel zu der Drehachse ausgerichteten Leisten zu versehen, die eine mittelmäßige aggressive Förderwirkung auf das Erntegut ausüben, "Presse à balles cylindriques 550, JOHN DEERE, Druckvermerk 10-84.74311 F/Fex."

Alle vorbeschriebenen Ballenpressen arbeiten bei der Mehrzahl von Erntegütern und unter den meisten Erntebedingungen zufriedenstellend; jedoch wird unter ungünstigen Umständen sehr trockenes Erntegut nicht von der Walze mitgenommen, kann an dieser vorbeigleiten und zu Verstopfungen führen.

Die EP-A1-0 309 936 offenbart eine Rundballenpresse mit einer sogenannten Starterwalze in einem nach unten offenen und sich nach oben verjüngenden Ballenpreßraum. Die Starterwalze setzt sich aus einem runden Grundkörper und darauf jeweils im Abstand von 90 Grad einer Leiste und einem nachgiebigen Streifen zusammen. Die Streifen schließen einenends direkt an die Leisten an und erstrecken sich von diesen ausgehend tangential fort, so daß sie den effektiven Durchmesser der Starterwalze bestimmen. Das abstehende Endstück der Streifen reibt an benachbarten Riemen entlang und ist so nachgiebig, daß es sich unter der Last eines Rundballens auf die Mantelfläche des Grundkörpers auflegen kann. Diese Ausführung der Streifen hat die Aufgabe, von den Riemen in einer Richtung mitgenommenes Erntegut abzustreifen und von dem Eindringen in den Spalt zwischen der Starterwalze und den Riemen abzuhalten, mithin Wickelprobleme zu vermeiden.

Diese Starterwalze hat den Nachteil, daß die Streifen nach einer bestimmten Betriebsdauer erlahmen und an der runden Mantelfläche anliegen bleiben; dann aber ist der Spalt zwischen der Starterwalze und den Riemen nicht mehr verschlossen, und es kann zum Wickeln kommen. Des weiteren wird aufgrund der ständigen Reibung der Streifen an den Riemen die Außenkante abgenutzt. Schließlich ist die Verwendung derartiger gummierter Streifen nur bei kurzem und sehr trockenem Preßgut vorteilhaft.

Die US-A-4,172,354 weist im Bodenbereich des Ballenpreßraums einer nach einem anderen Prinzip funktionierenden Rundballenpresse eine Fördertrommel mit großem Außendurchmesser auf, die mit sich axial erstreckenden Leisten besetzt ist, wobei in den Räumen zwischen den Leisten die Oberfläche des Grundkörpers mit Gummi beschichtet ist. Eine Starterwalze, die allerdings mehr eine Abstreiffunktion ausübt und nicht von dem Rundballen an sich beaufschlagt wird, weist hingegen nur axial verlaufende starre Leisten auf.

Die der Erfindung zugrunde liegende Aufgabe wird darin gesehen, eine Ballenpresse vorzuschlagen, deren Starterwalze das Pressen von unterschiedlichem Erntegut oder Erntegut unterschiedlicher Beschaffenheit zuläßt.

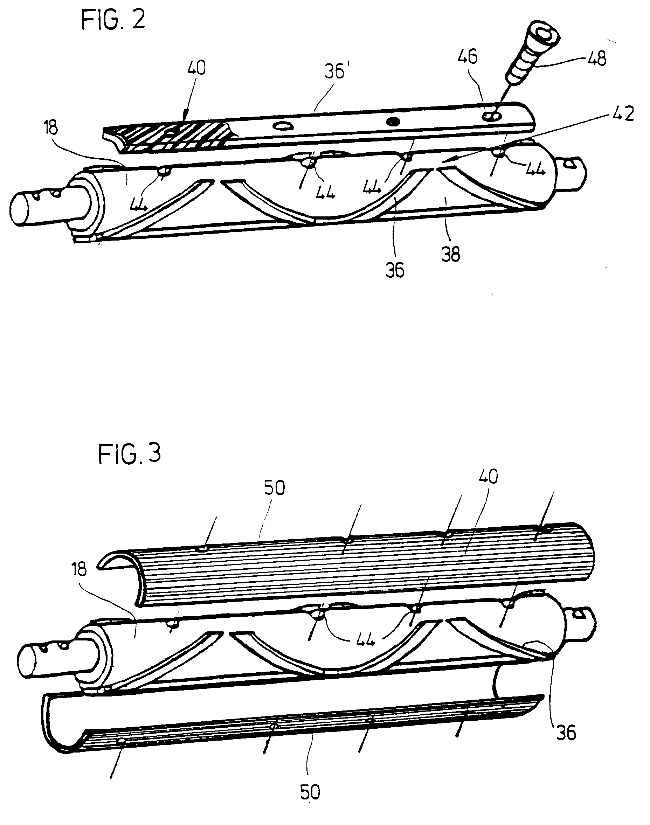

Nach den Ausführungsbeispielen gemäß den Figuren 2 und 3 sind starre Elemente vorgesehen, auf die ein abriebsfester und griffiger Belag aufgebracht ist und die beim Eintreten bestimmter Erntebergungsbedingungen wahlweise auf eine Walze aufgesetzt werden können, um vorher nicht gegebene Eigenschaften zu erzielen.

Auf diese Weise wird eine Mindestmitnahmereibung durch den abriebsfesten, griffigen Belag aufgebaut. Dieser Belag, der insbesondere aus Gummi oder einer Gummi- oder Harzmischung besteht, besitzt die erforderliche Griffigkeit, um trockenes, kurzes oder langes Erntegut mitzunehmen. Der Mitnahmeeffekt muß nicht unbedingt im Sinne eines Transports gegeben sein, sondern kann auch darin bestehen, daß das Erntegut in eine bestimmte Richtung umgelenkt wird, wie dies bei einer Starterrolle der Fall ist. Ein derartiger Belag ist ausreichend zum Lösen der vorgenannten Aufgabe. Insbesondere scheidet eine zu aggressive Förderung, die wiederum zu Wickelproblemen führen könnte, aus.

Eine weitere Anpassung wird durch die Verwendung von Schalenelementen ermöglicht, die auf eine bereits gegebene und evtl. sogar eingebaute Walze mit oder ohne Mitnehmer aufgesetzt werden können. Vorzugsweise können Schalenelemente mit verschieden aggressiven Belägen verwendet werden. Werden demontierbare Mitnehmer verwendet, für die bereits Befestigungsmittel vorgesehen sind, können diese Befestigungsmittel auch für die Anbringung der Schalenelemente benutzt werden.

Da es nicht erforderlich ist, die ganze Mantelfläche der Walze mit dem vorgenannten Belag zu versehen, reichen die auf der Walze angebrachten Mitnehmer aus, die entweder deren Förderwirkung erhöhen, zum seitlichen Verteilen des Ernteguts benutzt werden oder mit einem Abstreifer zusammenwirken, um zwar eine positive Förderung zu erbringen, aber gleichzeitig ein Umwickeln zu vermeiden.

Da die Mitnehmer selbst mit dem vorgenannten Belag versehen sind und wahlweise auf eine oder mehrere Walzen, insbesondere auf die Starterwalze, aufgebaut werden können, ist eine nachträgliche Verwirklichung der Erfindung bei herkömmlichen Ballenpressen möglich.

Die Möglichkeit, den Belag auf den Mitnehmern selbst anzubringen, läßt es zu, die Form der Mitnehmer entsprechend den Erntebedingungen zu wählen, wobei stets von einer Mindestmitnahmekraft durch den Belag auszugehen ist. Auf diese Weise kann durch die abwechselnde oder axial versetzte Anordnung verschiedener Mitnehmer die Förder- bzw. Umlenkeigenschaft der Walze entsprechend den zu erwartenden Bedingungen ausgerichtet oder beim Einsatz im Feld, entsprechend den vorgefundenen Bedingungen, angepaßt werden.

In der Zeichnung sind nachfolgend näher beschriebene Ausführungsbeispiele der Erfindung dargestellt. Es zeigt:
- Fig. 1: eine Ballenpresse mit mehreren Walzen in schematischer Darstellung und in Seitenansicht
- Fig. 2: eine der Walzen aus Figur 1 in einer vierten Ausführung in Vorderansicht und
- Fig. 3: eine der Walzen aus Figur 1 in einer fünften Ausführung in Vorderansicht.

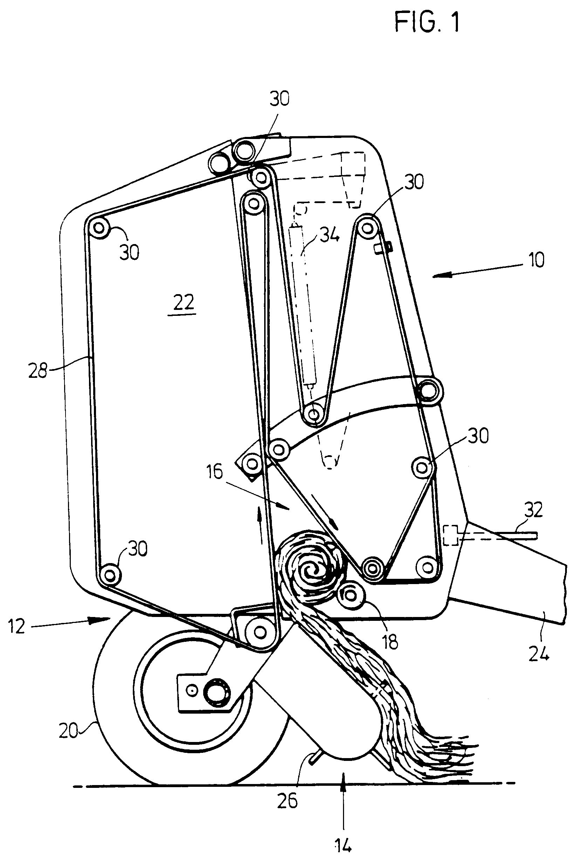

Eine in Figur 1 dargestellte erfindungsgemäße Ballenpresse 10 setzt sich im wesentlichen aus einem Rahmen 12, einer Aufnahmevorrichtung 14, einer Ballenbildungskammer 16 und einer als Starterwalze ausgebildeten Walze 18 zusammen.

Die Ballenpresse 10 wird benutzt, um Stroh, Heu, Gras oder dergleichen Erntegüter, die auf einem Feld in Schwade abgelegt sind oder von dort abgetrennt werden, in zylindrische Ballen, sogenannte Rundballen, zu pressen. Sie weist eine Ballenbildungskammer 16 mit veränderbarem Durchmesser auf und entspricht in ihrem Aufbau im wesentlichen einer Ballenpresse, wie sie in der US-PS-4,428,282 beschrieben ist. Es ist aber auch möglich, der Erfindung eine andere Bauart einer Ballenpresse zugrunde zu legen, insbesondere eine mit einer nicht in ihrer Größe veränderbaren Ballenbildungskammer.

Der Rahmen 12 umfaßt als wesentliche Bestandteile ein Fahrwerk 20, Seitenwände 22 und eine Deichsel 24 zur Verbindung mit einem Ackerschlepper.

Die Aufnahmevorrichtung 14 wird in dem vorliegenden Ausführungsbeispiel von einer sogenannten Pick-Up gebildet, die in einem Schwad auf dem Boden abgelegtes Erntegut mittels umlaufender Zinken 26 aufnimmt und es der Ballenbildungskammer 16 zuführt. In einem anderen Ausführungsbeispiel könnte anstatt der Pick-Up auch ein Mähvorsatz verwendet werden.

Die Ballenbildungskammer 16 nimmt in Figur 1 und somit in ihrem anfänglichen Zustand die Form eines Keils ein, der seitlich von einem Satz Riemen 28 begrenzt wird. Jeder Satz Riemen 28 besteht aus mehreren nebeneinander angeordneten Riemen 28, die über Rollen 30 geführt werden. Eine oder mehrere der Rollen 30 werden über eine Antriebsvorrichtung 32 von dem Ackerschlepper aus in Drehung versetzt und bewegen die Riemen 28 in eine bestimmt Richtung. Die Riemen 28 werden gespannt, indem mittels einer als Feder ausgebildeten Spannvorrichtung 34 einige der Rollen 30 mit den darüberlaufenden Riemen 28 seitlich ausgelenkt werden. Es ist aus Figur 1 zu entnehmen, daß in die Ballenbildungskammer 16 Erntegut eingespeist und dieses dort von den gegenläufigen Riemen 28 in Drehung versetzt wird, um einen Ballenkern zu bilden. Während der Fahrt über das Feld wird mehr und mehr Erntegut der Ballenbildungskammer 16 zugeführt, so daß sich der Ballenkern vergrößert und die ihn umgebenden Riemen 28 seitlich auslenkt. Die Riemen 28 können unter Erhöhung der Spannung an der Spannvorrichtung 34 mit den ihnen zugeordneten Rollen 30 solange ausweichen, bis die Ballenbildungskammer 16 nahezu den gesamten Raum zwischen den Seitenwänden 22 eingenommen hat; dann ist der Preßvorgang zu beenden.

Die Walze 18 befindet sich im unteren Bereich der Ballenbildungskammer 16, erstreckt sich längs zwischen den beiden Seitenwänden 22, verläuft parallelachsig zu den Rollen 30, verändert ihre Lage während des Preßvorgangs nicht, bewegt sich stets nahe der Oberflächen der Riemen 28 und wird ebenfalls mittels der Antriebsvorrichtung 32 angetrieben. Die Walze 18 nimmt aufgrund ihrer Lage die Funktion einer Starterwalze ein, d. h., sie unterstützt in der Anfangsphase des Preßvorgangs die Bildung des Ballenkerns, indem sie das Erntegut in der zunächst noch leeren Ballenbildungskammer 16 mit in Drehung versetzt; hierzu bewegt sie sich entgegengesetzt zu der Bewegungsrichtung der angrenzenden Riemen 28. In einer Ballenpresse anderer Bauart könnte diese Walze 18 eine Transportwalze darstellen.

Die Ausführungen der Walze 18, wie auch in den Figuren 2 und 3 dargestellt, sind stets so gewählt, daß sie geeignet sind, sowohl den Ballenkern in Drehung zu versetzen, als auch ein Eindringen des Ernteguts in den Spalt zwischen den Riemen 28 und der Walze 18 und ein Umwickeln der Walze 18 mit Erntegut zu vermeiden. Hierzu kann zunächst und in der einfachsten Ausführungsform die Walze 18 mit einem griffigen, abriebfesten und vorzugsweise glatten Belag aus Gummi, oder einer Gummi- oder Harzmischung umkleidet sein.

Die in Figur 2 dargestellte Walze 18 hat im wesentlichen eine zylindrische Form, die koaxial zu einer Drehachse verläuft. Auf der Mantelfläche der Walze 18 sind über die gesamte Länge spiralförmig in gleicher Steigung verlaufende, schmale und als Förderrippen ausgebildete Mitnehmer 36 angebracht, und zwar entweder aufgeschweißt oder aufgeschraubt.

Die Ausführungen gemäß den Figuren 2 und 3 haben gemein, daß auf der Mantelfläche der Walze 18 Mitnehmer 36 in der gleichen Weise angeordnet sind. Die Mitnehmer 36 sind jeweils zwei Paare von Mitnehmern 36, die in sich pfeilförmig zusammenlaufen und axial nebeneinander angeordnet sind. Die Räume 38 zwischen den Mitnehmern 36 sind nicht mit einem Belag 40 ausgefüllt. Die Mitnehmer 36 erstrecken sich zudem nicht über den gesamten Umfang der Walze 18, sondern sind an zwei diametral gegenüberliegenden Stellen unterbrochen und belassen zwischen sich einen parallel zu der Drehachse der Walze 18 verlaufenden Spalt 42, in dessen Bereich mehrere Gewindebohrungen 44 angebracht sind.

Gemäß Figur 2 wird jeder Spalt 42 zwischen den spiralförmig angeordneten Mitnehmern 36 von einem als Leiste ausgebildeten, geraden, und parallel zu der Drehachse der Walze 18 verlaufenden Mitnehmer 36' ausgefüllt und mittels Löcher 46 durchdringenden Schrauben 48 befestigt. Dieser Mitnehmer 36' ist auf seinen Oberflächen, die nicht an der Walze 18 anliegen, mit dem vorgenannten Belag 40 versehen.

Bei der Ausführungsform nach Figur 3 sind die Mitnehmer 36' demontiert und durch Schalenelemente 50 ersetzt, die ebenfalls mittels der Schrauben 48 in denselben Gewindebohrungen 44 befestigt sind. Beide Schalenelemente 50 sind als Halbschalen ausgebildet, die ein Bogenmaß von 180° umfassen und insgesamt die Walze 18 mit den auf ihr verbliebenen Mitnehmern 36 vollumfangsmäßig bedecken. Die nach außen weisenden Oberflächen der Schalenelemente 50 sind mit dem vorgenannten Belag 40 aus Gummi oder einer Gummi- oder Harzmischung bedeckt.

In einer nicht gezeigten Ausführungsform können die Mitnehmer 36 auch mit Bezug auf die Mitnehmer 36' axial zueinander versetzt angeordnet werden.

Der Vorteil der demontierbaren Mitnehmer 36' oder der Schalenelemente 50 liegt darin, daß die mit dem Belag 40 versehenen Teile wahlweise oder nachträglich angebracht werden können.

## Patentansprüche

1. Ballenpresse (10) zum Bilden zylindrischer Ballen aus einem Erntegut mit einer Ballenbildungskammer (16), einem dieser vorgeschalteten Einlaßspalt und einer in dem Einlaßspalt angeordneten drehbaren, das Erntegut fördernden oder umlenkenden Walze (18), auf deren Umfang wenigstens bereichsweise Material erhöhter Griffigkeit vorgesehen ist, dadurch gekennzeichnet, daß zur Erzeugung der erhöhten Griffigkeit wahlweise auf die Walze (18) aufsetzbare und mit einem abriebsfesten und griffigen Belag (40) belegte Mitnehmer (36) oder Schalenelemente (50) vorgesehen sind.

2. Ballenpresse nach Anspruch 1, dadurch gekennzeichnet, daß der Belag (40) aus Gummi, einer Gummimischung oder einer Harzmischung hergestellt ist.

3. Ballenpresse nach Anspruch 1 oder 2, dadurch gekennzeichnet, daß die Walze (18) eine Starterwalze ist und die Ballenbildungskammer (16) von mehreren nebeneinander angeordneten und über parallel zueinander angeordnete und in ihrer Lage während des Preßvorgangs veränderbare Rollen (30) verlaufenden Riemen (28) begrenzt wird.

4. Ballenpresse nach einem oder mehreren der Ansprüche 1 bis 3, dadurch gekennzeichnet, daß die Mitnehmer (36) spiralförmig auf der Mantelfläche der Walze (18) angeordnet sind.

5. Ballenpresse nach einem oder mehreren der Ansprüche 1 bis 4, dadurch gekennzeichnet, daß die Mitnehmer (36') als parallel zu der Drehachse der Walze (18) verlaufende und auf deren Mantelfläche befestigte Leisten ausgebildet sind.

6. Ballenpresse nach einem oder mehreren der Ansprüche 1 bis 5, dadurch gekennzeichnet, daß die Mitnehmer (36') von der Walze (18) demontierbar sind.

7. Ballenpresse nach einem oder mehreren der vorherigen Ansprüche, dadurch gekennzeichnet, daß auf der Mantelfläche sowohl spiralförmig als auch parallel zu der Drehachse angeordnete Mitnehmer (36, 36') vorgesehen sind.

8. Ballenpresse nach einem oder mehreren der vorherigen Ansprüche, dadurch gekennzeichnet, daß die spiralförmig angeordneten Mitnehmer (36) in bezug auf die Drehachse der Walze (18) axial versetzt sind.

9. Ballenpresse nach einem oder mehreren der vorherigen Ansprüche, dadurch gekennzeichnet, daß die als Leisten ausgebildeten Mitnehmer (36') diametral gegenüberliegend angeordnet sind.

10. Ballenpresse nach einem oder mehreren der vorherigen Ansprüche, dadurch gekennzeichnet, daß die Schalenelemente (50) die Walze (18) vollumfangsmäßig bedecken.

11. Ballenpresse nach Anspruch 10, dadurch gekennzeichnet, daß die Schalenelemente (50) auf die Mitnehmer (36) aufsetzbar sind.

12. Ballenpresse nach Anspruch 9 oder 10, dadurch gekennzeichnet, daß die Schalenelemente (50) anstatt der als Leisten ausgebildeten Mitnehmer (36') aufsetzbar sind.

13. Ballenpresse nach einem oder mehreren der vorherigen Ansprüche, dadurch gekennzeichnet, daß der Belag (40) eine im wesentlichen glatte Oberfläche aufweist.

14. Ballenpresse nach einem oder mehreren der vorherigen Ansprüche, dadurch gekennzeichnet, daß der Belag (40) einen hohen Reibungskoeffizient aufweist.

## Claims

1. Baler (10) for forming cylindrical bales from a crop, with a bale forming chamber (16), an inlet connected in front thereof and a rotatable roll (18) conveying or deflecting the crop disposed in the inlet and with material having an elevated slip-resistance provided, at least in some areas, on its circumference, characterised in that in order to generate the elevated slip-resistance, impellers (36) or shell elements (50), which may be attached onto the roll (18) and are covered with a wear-resistant and slip-resistant coating (40), are selectively provided.

2. Baler according to Claim 1, characterised in that the coating (40) is made from rubber, a rubber mixture or a resin mixture.

3. Baler according to Claim 1 or 2, characterised in that the roll (18) is a starter roll and the bale forming chamber (16) is defined by several adjacent belts (28) extending over rolls (30), which are arranged parallel to one another and can change their position during the baling process.

4. Baler according to one or some of Claims 1 to 3, characterised in that the impellers (36) are arranged in a spiral shape on the outer surface of the roll (18).

5. Baler according to one or some of Claims 1 to 4, characterised in that the impellers (36') are constructed as ribs running parallel to the rotational axis of the roll (18) and fastened on its outer surface.

6. Baler according to one or some of Claims 1 to 5, characterised in that the impellers (36') may be detached from the roll (18).

7. Baler according to one or some of the preceding claims, characterised in that impellers (36, 36') arranged in a spiral as well as parallel to the rotational axis are provided on the outer surface.

8. Baler according to one or some of the preceding claims, characterised in that the impellers (36) arranged in a spiral are axially offset with respect to the rotational axis of the roll (18).

9. Baler according to one or some of the preceding claims, characterised in that the impellers (36') constructed in the form of ribs are arranged to lie diametrically opposite one another.

10. Baler according to one or some of the preceding claims, characterised in that the shell elements (50) cover the roll (18) over its full circumference.

11. Baler according to Claim 10, characterised in that the shell elements (50) may be attached onto the impellers (36).

12. Baler according to Claim 9 or 10, characterised in that shell elements (50) may be attached in place of the impellers (36') in the form of ribs.

13. Baler according to one or some of the preceding claims, characterised in that the coating (40) has an essentially smooth surface.

14. Baler according to one or some of the preceding claims, characterised in that the coating (40) has a high coefficient of friction.

## Revendications

1. Presse à balles (10) servant à former des balles cylindriques d'une récolte, comportant une chambre (16) de formation des balles, une fente d'introduction disposée en amont de cette chambre et un cylindre rotatif (18), qui est disposé dans la fente d'entrée et entraîne ou dévie la récolte et sur la périphérie duquel est prévu, au moins par endroits, un matériau présentant une adhérence accrue, caractérisée en ce que pour l'obtention de l'adhérence accrue, il est prévu au choix des organes d'entraînement (36) ou des éléments en forme de coques (50), qui peuvent être montés sur le cylindre (18) et sont garnis par un revêtement résistant à l'usure et antidérapant (40).

2. Presse à balles selon la revendication 1, caractérisée en ce que le revêtement (40) est réalisé en caoutchouc, en un mélange de caoutchouc ou en un mélange de résines.

3. Presse à balles selon la revendication 1 ou 2, caractérisée en ce que le cylindre (18) est un cylindre starter et que la chambre (16) de formation des balles est limitée par plusieurs courroies (28), qui sont disposées les unes à côté des autres et circulent sur des rouleaux (30) qui sont parallèles entre eux et dont la position est variable pendant l'opération de pressage.

4. Presse à balles selon une ou plusieurs des revendications 1 à 3, caractérisée en ce que les organes d'entraînement (36) sont disposés en hélice sur la surface enveloppe du cylindre (18).

5. Presse à balles selon une ou plusieurs des revendications 1 à 4, caractérisée en ce que les organes d'entraînement (36') sont agencés sous la forme de barrettes qui sont parallèles à l'axe de rotation du cylindre (18) et sont fixées sur la surface enveloppe de ce cylindre.

6. Presse à balles selon une ou plusieurs des revendications 1 à 5, caractérisée en ce que les organes d'entraînement (36') peuvent être démontés du cylindre (18).

7. Presse à balles selon une ou plusieurs des revendications précédentes, caractérisée en ce que des organes d'entraînement (36,36') disposés en hélice ainsi que des organes d'entraînement (36,36') disposés parallèlement à l'axe de rotation sont prévus sur la surface enveloppe.

8. Presse à balles selon une ou plusieurs des revendications précédentes, caractérisée en ce que les organes d'entraînement (36) disposés en hélice sont décalés axialement par rapport à l'axe de rotation du cylindre (18).

9. Presse à balles selon une ou plusieurs des revendications précédentes, caractérisé en ce que les organes d'entraînement (36') agencés sous la forme de barrettes sont disposés en étant diamétralement opposés.

10. Presse à balles selon une ou plusieurs des revendications précédentes, caractérisé en ce que les éléments en forme de coques (50) recouvrent le cylindre (18) sur toute sa circonférence.

11. Presse à balles selon la revendication 10, caractérisée en ce que les éléments en forme de coques (50) peuvent être montés sur les organes d'entraînement (36).

12. Presse à balles selon la revendication 9 ou 10, caractérisée en ce que les éléments en forme de coques (50) peuvent être montés à la place des organes d'entraînement (36') agencés en forme de barrettes.

13. Presse à balles selon une ou plusieurs des revendications précédentes, caractérisé en ce que le revêtement (40) possède une surface essentiellement lisse.

14. Presse à balles selon une ou plusieurs des revendications précédentes, caractérisé en ce que le revêtement (40) possède un coefficient de frottement élevé.
